# EUROPÄISCHE PATENTSCHRIFT

(11) **EP 0 939 711 B1**
(45) Veröffentlichungstag und Bekanntmachung des Hinweises auf die Patenterteilung: **18.08.2004**
(21) Anmeldenummer: 98956795.3
(22) Anmeldetag: 23.09.1998
(51) Int. Cl.: B60S 1/34

(54) **WISCHANLAGE, INSBESONDERE FÜR SCHEIBEN VON KRAFTFAHRZEUGEN**
WIPER, IN PARTICULAR FOR MOTOR VEHICLE WINDOW GLASS
SYSTEME D'ESSUIE-GLACE, NOTAMMENT POUR VITRES DE VEHICULES A MOTEUR

(30) Priorität: 24.09.1997 DE 19742071
(43) Veröffentlichungstag der Anmeldung: 08.09.1999
(73) Patentinhaber: ROBERT BOSCH GMBH, 70442 Stuttgart (DE)
(72) Erfinder: METZ, Ulrich, D-77880 Sasbach (DE)
(86) Internationale Anmeldenummer: PCT/DE1998/002835
(87) Internationale Veröffentlichungsnummer: WO 1999/015383

(56) Entgegenhaltungen:
- DE-A- 19 546 862
- GB-A- 1 190 426
- US-A- 3 599 270

## Beschreibung

Die Erfindung betrifft eine Wischanlage, insbesondere für Scheiben von Kraftfahrzeugen, mit den im Oberbegriff des Anspruchs 1 genannten Merkmalen.

### Stand der Technik

Eine Wischanlage für Scheiben von Kraftfahrzeugen ist aus der GB-A-1 190 426 bekannt. Ein Wischblatt wird hierbei mittels eines Parallelogrammgestänges über die Scheibe geführt, wobei mittels einer Getriebevorrichtung mit drei Zahnrädern, die entlang eines Hebels der Wischanlage angeordnet ist, die Pendelbewegung des Wischerarms mit einer Hubbewegung überlagert wird. Nachteilig ist neben der aufwendigen Konstruktion der Getriebevorrichtung, daß die Hebellänge nicht frei gewählt werden kann, sondern stets durch die für den Betrieb der Wischanlage notwendige Dimensionierung der Zahnräder vorgegeben ist.

Eine Wischanlage der gattungsgemäßen Art ist weiterhin aus der DE-A-195 46 862 bekannt. Diese Wischanlage weist einen über ein Pendellager pendelbar gelagerten und angetriebenen Wischerarm auf, der ein Wischerblatt trägt, das quer zu seiner Längserstreckung zwischen zwei Umkehrlagen an einer zu wischenden Scheibe hin- und herbewegbar ist. Um ein möglichst großes Wischfeld bearbeiten zu können, ist vorgesehen, durch die Anordnung von zwei miteinander wirkverbundenen Mehrgelenkgetrieben der Pendelbewegung des Wischerblatts eine Hubbewegung zu überlagern. Hierdurch wird erreicht, daß das Wischerblatt in seinen Pendelumkehrlagen annähernd parallel zu einem Rand der zu wischenden Scheiben führbar ist. Bei der bekannten Wischanlage ist nachteilig, daß durch den Aufbau der zwei miteinander verbundenen Mehrgelenkgetriebe ein relativ großer Einbauraum zur Verfügung stehen muß.

### Vorteile der Erfindung

Die erfindungsgemäße Wischanlage mit den im Anspruch 1 genannten Merkmalen bietet demgegenüber den Vorteil, daß in einfacher Weise einer Pendelbewegung des Wischerblattes eine Hubbewegung überlagerbar ist, und der hierzu notwendige Antrieb einen relativ kleinen Einbauraum benötigt. Dadurch, daß eine Lagerachse des Pendellagers gleichzeitig eine Antriebsachse des zweiten Getriebes ist, können die zwei miteinander wirkverbundenen Getriebe zur Überlagerung der Hubbewegung des Wischerblattes über die Pendelbewegung des Wischerblattes so miteinander kombiniert werden, daß diese in einer sehr kompakten Bauform realisiert werden können. Insbesondere, wenn das zweite Getriebe ein Zahnradgetriebe ist, kann die die Pendelbewegung überlagernde Hubbewegung durch wenige, insbesondere zwei einfache Maschinenelemente erzielt werden, die konstruktiv mit dem die Pendelbewegung hervorrufenden, vorzugsweise als Mehrgelenkgetriebe ausgebildeten, Getriebe kombiniert werden können.

Ferner ist in bevorzugter Ausgestaltung der Erfindung vorgesehen, daß das zweite Getriebe als Mehrgelenkgetriebe, insbesondere als Viergelenkgetriebe, ausgebildet ist, wobei vorzugsweise ein erstes Getriebeglied des Viergelenkgetriebes drehfest mit der Lagerachse des Pendellagers verbunden ist. Auch hier kann in einfacher Weise der Antrieb der Pendelbewegung gleichzeitig zum Antrieb des die Pendelbewegung überlagernde Hubbewegung realisierenden Getriebes genutzt werden.

Weitere vorteilhafte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine schematische Prinzipdarstellung einer Wischanlage in einem ersten Ausfüh- rungsbeispiel;
- Figur 2: eine Detailvergrößerung der Wischanlage gemäß Figur 1;
- Figur 3: eine schematische Prinzipdarstellung einer Wischanlage in einem zweiten Ausführungsbeispiel und
- Figur 4: eine Detailvergrößerung der Wischanlage gemäß Figur 3.

### Beschreibung der Ausführungsbeispiele

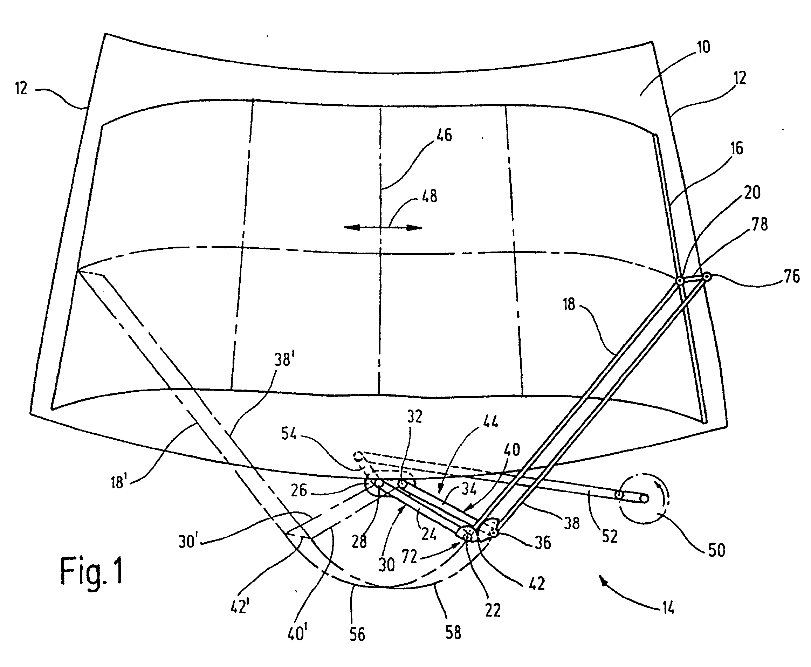

Figur 1 zeigt eine Prinzipdarstellung einer Windschutzscheibe 10 eines nicht näher dargestellten Kraftfahrzeuges. Die Windschutzscheibe 10 wird von einem umlaufenden Rand 12 begrenzt. Der Windschutzscheibe 10 ist eine Scheibenwischanlage 14 zugeordnet. Figur 1 zeigt die Windschutzscheibe 10 in Frontansicht, das heißt, von außen mit Blickrichtung von vorn auf das Kraftfahrzeug. Die Scheibenwischanlage 14 umfaßt ein Wischerblatt 16, das in seiner einen Umkehrlage dargestellt ist, die sich auf der Seite eines Führers des Kraftfahrzeuges befindet. Das Wischerblatt 16 liegt in dieser Umkehrlage entsprechend seiner Längserstreckung in der Nähe des Randes 12 der Windschutzscheibe 10 etwa parallel zu diesem.

Das Wischerblatt 16 ist in seinem Mittelabschnitt mittels eines Gelenkes 20 mit einem freien Ende eines angetriebenen Wischerarmes 18 verbunden. Das andere Ende des Wischerarmes 18 ist über ein Gelenk 22 mit einem Ende eines Arms 24 verbunden, dessen anderes Ende in einem karosseriefesten Bauelement 26 pendelbar gelagert ist. Die Lagerstelle am Bauelement 26 ist mit dem Bezugszeichen 28 versehen. Der Arm 24 bildet einen Schwinghebel 30 für den Wischerarm 18. An dem Bauelement 26 ist weiterhin in einer Lagerstelle 32 ein Arm 34 mit seinem einen Ende pendelbar angelenkt, dessen anderes Ende zu einem Gelenk 36 führt, durch das der Arm 34 mit einem Steuerarm 38 gelenkig verbunden ist. Der Arm 34 bildet einen Lenker 40 der Scheibenwischanlage 14 aus. Zwischen den Gelenken 22 und 36 ist ein Distanzarm 42 angeordnet, der mit dem Wischerarm 18 und dem Steuerarm 38 gelenkig verbunden ist. Der Schwinghebel 30, der Steuerarm 38 sowie der Distanzarm 42 bilden somit als Getriebeglieder ein Mehrgelenkgetriebe, hier ein Viergelenkgetriebe 44, wobei die Lagerstellen 26 und 32 sowie die Gelenke 22 und 36 die Getriebeachsen ergeben. Eine wirksame Länge des Lenkers 40 wird durch den Abstand zwischen der Lagerstelle 32 und dem Gelenk 36 sowie eine wirksame Länge des Schwinghebels 30 durch den Abstand zwischen der Lagerstelle 28 und dem Gelenk 22 bestimmt. Die wirksamen Längen des Schwinghebels 30 und des Lenkers 40 sind im gezeigten Ausführungsbeispiel gleich groß, so daß sich bezogen auf eine Mittelposition 46 des Wischerblattes 16 ein symmetrisches Wischfeld ergibt.

Mittels des Viergelenkgetriebes 44 wird eine gemäß dem Doppelpfeil 48 angedeutete Hin- und Herbewegung des Wischerblattes 16 von seiner einen Umkehrlage in Nähe des rechts dargestellten Randes 12 der Windschutzscheibe 10 in seine andere Umkehrlage in Nähe des gemäß der Darstellung linken Randes 12 der Windschutzscheibe 10, also eine Pendelbewegung, erzeugt. Zum Erzeugen der Pendelbewegung ist ein hier angedeutetes elektromotorisch betätigbares Antriebsaggregat 50 vorgesehen, das über eine Kurbelanordnung 52 mit einem drehfest mit der Lagerstelle 28 verbundenen Antriebsarm 54 gekoppelt ist. Durch Antreiben der Kurbel 52 über das Aggregat 50 wird der Antriebsarm 54 in eine Hin- und Herbewegung versetzt, die über die Lagerstelle 28 auf das Viergelenk 44 übertragen wird.

In einer gestrichelten Darstellung sind in Figur 1 die der linken Umkehrlage des Wischerblattes 16 entsprechenden Positionen der Getriebeglieder des Viergelenkgetriebes 44 gezeigt. Das Gelenk 22 erfährt hierbei eine Bewegung entlang einer mit 56 bezeichneten Bahn, während das Gelenk 36 eine Bewegung entlang einer mit 58 bezeichneten Bahn erfährt.

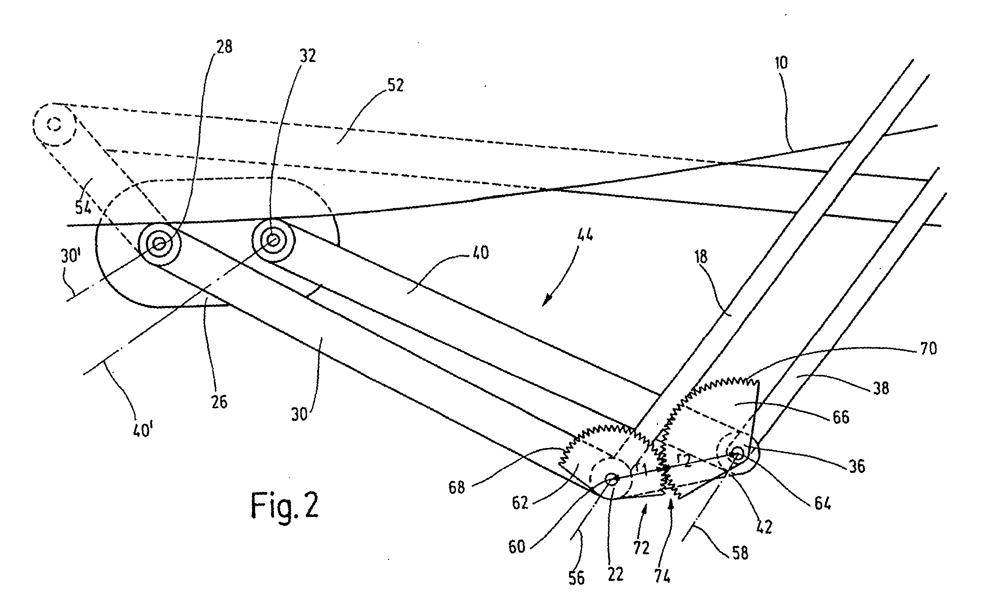

In Figur 2 ist die Scheibenwischanlage 14 im Bereich des Viergelenkes 44 in einer vergrößerten Darstellung gezeigt. Gleiche Teile wie in Figur 1 sind mit gleichen Bezugszeichen versehen und nicht nochmals erläutert. Anhand der vergrößerten Darstellung wird deutlich, daß eine Lagerachse 60 des Gelenkes 22 ein Zahnrad 62 trägt. Das Zahnrad 62 ist drehfest auf der Lagerachse 60 angeordnet. Eine Lagerachse 64 des Gelenkes 36 trägt ein weiteres Zahnrad 66. Die Zahnräder 62 und 66 sind lediglich kreissegmentartig ausgebildet, wobei die Größe der Kreissegmente der maximalen Pendelbewegung 48 des Wischerblattes 16 entspricht. Das Zahnrad 62 besitzt einen Radius r₁, während das Zahnrad 66 einen Radius r₂ besitzt. Die Radien r₁ und r₂ sind so aufeinander abgestimmt, daß ein Zahnkranz 68 des Zahnrades 62 einen Zahnkranz 70 des Zahnrades 66 kämmt. Die Zahnräder 62 und 66 bilden Getriebeglieder eines zweiten Getriebes 72 der Scheibenwischanlage 14, das hier als Zahnradgetriebe 74 ausgebildet ist. Im gezeigten Beispiel ist der Radius r₁ des Zahnrades 62 kleiner gewählt als der Radius r₂ des Zahnrades 66, wobei die Summe der Radien r₁+r₂ gleich der wirksamen Länge des Distanzarmes 42 des Viergelenkgetriebes 44 entspricht. Durch die einander kämmenden, sich aneinander abstützenden Zahnräder 62 und 66 wird der an dem Gelenk 42 angelenkte Steuerarm 38 in einer definierten Position gehalten.

Der Steuerarm 38 ist - wie Figur 1 zeigt - an seinem dem Gelenk 36 abgewandten Ende mit einem Gelenk 76 verbunden, das einen mit dem Gelenk 20 verbundenen Hebel 78 trägt. Der Hebel 78 ist in etwa quer zur Längserstreckung des Wischerblattes 16 ausgerichtet. Die Lagerachse 60 und die Lagerachse 64 der Gelenke 22 beziehungsweise 36 sind fluchtend zueinander angeordnet, so daß die Pendelbewegung der Scheibenwischanlage 14 erfolgen kann, und die Zahnräder 62 und 66 im wesentlichen spielfrei jederzeit ineinandergreifen. Ferner sind die Achsen der Gelenke 20, 76 ebenfalls parallel zu den Lagerachsen 60 und 64 ausgerichtet. Dies gilt ebenso für die Achsen der Lagerstellen 28 beziehungsweise 32 zur karosseriefesten Ablenkung des Schwinghebels 30 beziehungsweise des Lenkers 40 der Scheibenwischanlage 14.

Während der über das Aggregat 50 erzeugten Pendelbewegung 48 zwischen den zwei Umkehrlagen rollt das Zahnrad 66 über das Zahnrad 62 ab, so daß die Pendelbewegung des Lenkers 40 von einer hierdurch hervorgerufenen Hubbewegung überlagert wird. Diese Hubbewegung wird erzielt, indem die in den Gelenken 22 beziehungsweise 36 gelagerten Enden des Schwinghebels 30 und des Lenkers 40 durch das Abrollen der Zahnräder 62 und 66 voneinander wegbewegt werden, während der Abstand der in den Lagerstellen 28 und 32 gelagerten Enden des Schwinghebels 30 und des Lenkers 40 gleichbleibt. Durch eine Wahl des Radius r₁ des Zahnrades 62 zu dem Radius r₂ des Zahnrades 66 kann die die Schwenkbewegung überlagernde Hubbewegung eingestellt werden. Diese Hubbewegung wird auf das Wischerblatt 16 über den Steuerarm 38 übertragen, wobei entsprechend der wirksamen Länge des Distanzarmes 42 und somit der Summe der Radien r₁+r₂ und der wirksamen Länge des Hebels 78 erreicht wird, daß das Wischerblatt 16 während der Pendelbewegung 48 im wesentlichen quer zur Verschieberichtung gehalten wird. Durch die über die Dimensionierung der Zahnräder 62 und 66 erfolgende Einstellung der die Pendelbewegung überlagernden Hubbewegung kann somit mit einer Scheibenwischanlage 14 mit lediglich einem Wischerblatt 16 ein großer Bereich der Windschutzscheibe 10, durch insbesondere bis nah an deren Rand 12 heranlaufende parallele Pendelbewegungen erfaßt werden.

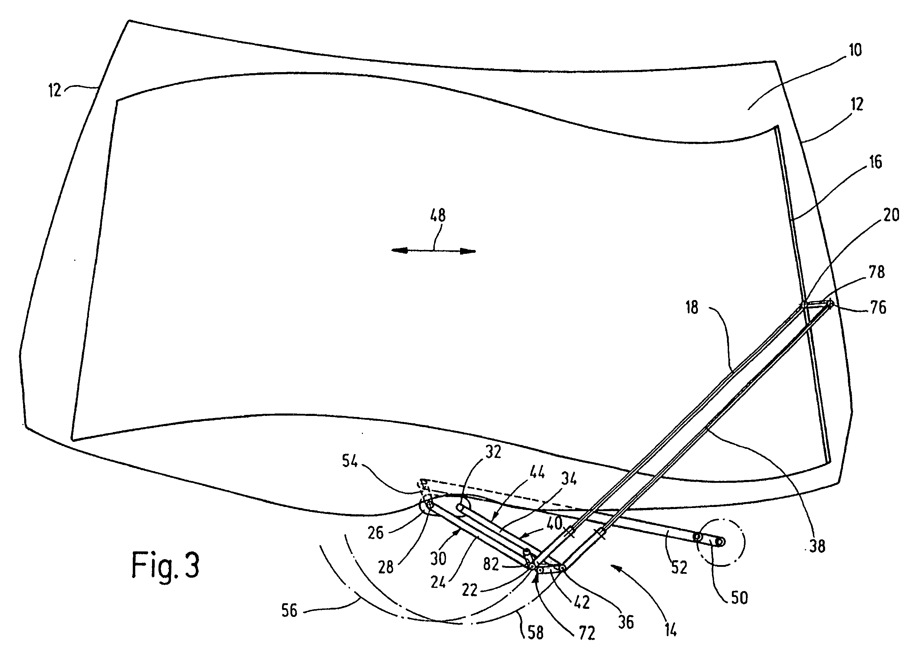

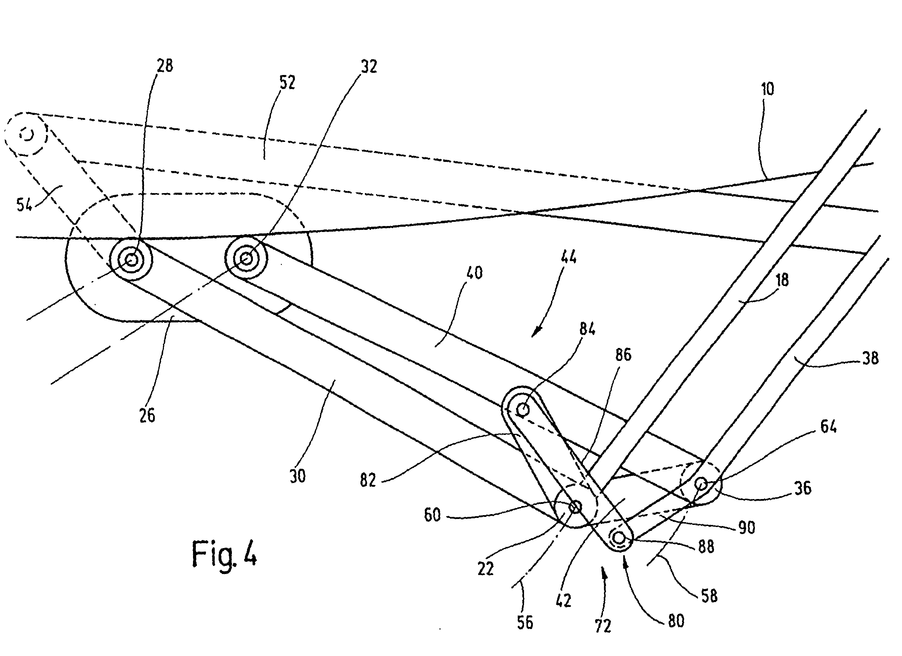

In den Figuren 3 und 4 ist die Scheibenwischanlage 14 in einem zweiten Ausführungsbeispiel gezeigt, wobei Figur 3 eine schematische Gesamtansicht und Figur 4 eine vergrößerte Detailansicht der Scheibenwischanlage 14 zeigt. Gleiche Teile wie in den Figuren 1 und 2 sind mit gleichen Bezugszeichen versehen und nicht nochmals erläutert. Hinsichtlich Aufbau und Funktion der gleichen Teile wird auf die Beschreibung zu den Figuren 1 und 2 verwiesen, so daß jetzt lediglich nur noch die Unterschiede erläutert werden.

Das die die Pendelbewegung des Wischerblattes 16 überlagernde Hubbewegung hervorrufende Getriebe 72 ist hier als Mehrgelenkgetriebe, im Beispiel als Viergelenkgetriebe 80, ausgebildet. Dieses besitzt ein erstes Getriebeglied 82, dessen eines Ende drehfest auf der Lagerachse 60 des Gelenkes 22 angeordnet ist.

Das andere Ende des Getriebegliedes 82 ist über ein Gelenk 84 mit dem ersten Ende eines zweiten Getriebegliedes 86 verbunden. Das andere Ende des Getriebegliedes 86 ist über ein Gelenk 88 mit einem Ende eines Getriebegliedes 90 verbunden, dessen anderes Ende an der Lagerachse 64 des Gelenkes 36 drehfest angeordnet ist. Gemäß der in Figur 4 dargestellten Vergrößerung kann das Getriebeglied 90 auch als Verlängerung des Steuerarms 38 ausgebildet sein, die unter Ausbildung eines stumpfen Winkels in Richtung des karosseriefesten Bauelementes 26 abgewinkelt ist.

Das Viergelenkgetriebe 80 wird somit von den Getriebegliedern 82, 86, 90 sowie 42 gebildet, wobei das Getriebeglied 82 drehfest zur Lagerachse 60 des Gelenkes 22 und das Getriebeglied 90 drehfest zur Lagerachse 64 des Gelenkes 36 angeordnet ist. Die Getriebeglieder 86 und 42 sind an ihren beiden Enden beweglich gelagert, so daß es zur Ausbildung eines sogenannten Koppelviereckes kommt. Die Funktion des Koppelviereckes, insbesondere die Erzeugung der die Pendelbewegung überlagernden Hubbewegung, wird im wesentlichen durch die wirksame Länge der Getriebeglieder 86 und 42 bestimmt. Die wirksame Länge des Getriebegliedes 86 wird durch den Abstand zwischen den Gelenken 84 und 88 und die wirksame Länge des Getriebegliedes 42 durch den Abstand zwischen den Gelenken 22 und 36 bestimmt. Im gezeigten Beispiel ist die wirksame Länge des Getriebegliedes 86 größer als die wirksame Länge des Getriebegliedes 42. Bei Pendelbewegung des Viergelenkgetriebes 44 beschreibt die Lagerachse 60 die Bewegungsbahn 56 und die Lagerachse 64 die Bewegungsbahn 58. Hierbei nähern sich die Bewegungsbahnen 56 und 58, in der Ebene betrachtet, bis zu einem der Mittelstellung des Wischerblattes 16 entsprechenden Schnittpunkt an, wobei gleichzeitig die Lagerachse 64 sich einerseits über das Getriebeglied 42 und andererseits über das Getriebeglied 86 an der Lagerachse 60 abstützt, wobei eine relative Beweglichkeit zwischen den Lagerachsen 64 beziehungsweise 60 gegeben ist. Dadurch, daß die wirksame Länge des Getriebegliedes 86 größer ist als die wirksame Länge des Getriebegliedes 42 wird mit der Pendelbewegung gleichzeitig eine Hubbewegung auf den Steuerarm 38 ausgeführt, so daß das Wischerblatt 16 die in Figur 3 angedeutete Pendelbewegung 48 ausführt, wobei der Verlauf in etwa sinusförmig quer zu Längserstreckung des Wischerblattes 16 erfolgt. Durch Abstimmung der wirksamen Längen der Getriebeglieder 86 und 42 kann dieser Verlauf variiert werden.

Es ist selbstverständlich, daß die einzelnen Getriebeglieder der Gelenke 44 beziehungsweise 72 sowie der Steuerarm 38 sich in hintereinanderliegenden Ebenen bewegen, so daß die Pendel- beziehungsweise Hubbewegung des Wischerblattes 16 realisierbar ist.

## Patentansprüche

1. Wischanlage, insbesondere für Scheiben von Kraftfahrzeugen, mit einem Wischerarm (18), der an seinem einen Ende in einem Pendellager (30) pendelbar gelagert ist, an dessen anderem, freien Ende, ein an der zu wischenden Scheibe anlegbares, zwischen zwei Umkehrlagen quer zu seiner Längserstreckung hin- und herbewegbares Wischerblatt (16) angeordnet ist, mit einem sich etwa parallel zum Wischerarm (18) erstreckenden Steuerarm (38), dessen eines Ende pendelbar (30) gelagert ist, und dessen anderes Ende gelenkig mit dem Wischerblatt (16) verbunden ist, so dass der Wischerarm (18) und der Steuerarm (38) während des Wischbetriebs eine im Wesentlichen gleiche Pendelbewegung ausführen, wobei das Pendellager (30) mit einem ersten Getriebe wirkverbunden ist, von dem der Steuerarm (38) geführt wird, wobei das erste Getriebe eine im Gelenk (22) der Verbindung von Wischerarm (18) und Schwinghebel (30) angeordnete Lagerachse (60) und eine weitere, im Gelenk (36) der Verbindung von Steuerarm (38) und Lenker (40) angeordnete Lagerachse (64) aufweist, und mit einem zweiten, mit dem ersten Getriebe wirkverbundenem Getriebe (72) zur Überlagerung der Pendelbewegung mit einer Hubbewegung des Wischerblattes (16), **dadurch gekennzeichnet, dass** die Lagerachsen (60,64) Getriebeachsen des zweiten Getriebes (72) sind.

2. Wischanlage nach Anspruch 1, **dadurch gekennzeichnet, daß** das zweite Getriebe (72) ein Zahnradgetriebe (74) ist.

3. Wischanlage nach einem der vorhergehenden Ansprüche, **dadurch gekennzeichnet, daß** die Lagerachse (60) ein drehfest angeordnetes erstes Zahnrad (62) aufweist, das ein zweites Zahnrad (66) kämmt, das auf einer Lagerachse (64) des Steuerarmes (38) angeordnet ist.

4. Wischanlage nach einem der vorhergehenden Ansprüche, **dadurch gekennzeichnet, daß** die Zahnräder (62, 64) unterschiedliche Radien (r₁, r₂) aufweisen.

5. Wischanlage nach Anspruch 4, **dadurch gekennzeichnet, daß** der Radius (r₁) des ersten Zahnrades (62) kleiner ist als der Radius (r₂) des zweiten Zahnrades (66).

6. Wischanlage nach Anspruch 1, **dadurch gekennzeichnet, daß** das zweite Getriebe (72) ein Mehrgelenkgetriebe ist.

7. Wischanlage nach Anspruch 6, **dadurch gekennzeichnet, daß** das zweite Getriebe (72) ein als Koppelgetriebe wirkendes Viergelenkgetriebe (80) ist.

8. Wischanlage nach einem der Ansprüche 6 und 7, **dadurch gekennzeichnet, daß** ein erstes Getriebeglied (82) drehfest mit der Lagerachse (60) verbunden ist, ein drittes Getriebeglied (90) drehfest mit der Lagerachse (64) verbunden ist und die Getriebeglieder (92, 90) über beweglich gelagerte Getriebeglieder (86, 42) gelenkig miteinander verbunden sind.

9. Wischanlage nach Anspruch 8, **dadurch gekennzeichnet, daß** ein wirksame Länge des Getriebegliedes (86) größer ist als eine wirksame Länge des Getriebegliedes (42).

## Claims

1. Wiper system, in particular for windows of motor vehicles, having a wiper arm (18) which is mounted at its one end in a pendulous manner in a pendulum bearing (30) and on the other free end of which is arranged a wiper blade (16) which can be placed against the window to be wiped and is movable to and fro transversely to its longitudinal extent between two reversal positions, and having a control arm (38) which extends approximately parallel to the wiper arm (18) and the one end of which is pendulously mounted, and the other end of which is connected in an articulated manner to the wiper blade (16), so that, during the wiping operation, the wiper arm (18) and the control arm (38) execute an essentially identical pendulum movement, the pendulum bearing (30) being operatively connected to a first mechanism by which the control arm (38) is guided, the first mechanism having a bearing spindle (60) which is arranged in the joint (22) of the connection of the wiper arm (18) and oscillating lever (30), and a further bearing spindle (64) which is arranged in the joint (36) of the connection of the control arm (38) and link (40), and having a second mechanism (72) which is operatively connected to the first mechanism and is intended for combining the pendulum movement with a lifting movement of the wiper blade (16), **characterized in that** the bearing spindles (60, 64) are mechanism spindles of the second mechanism (72).

2. Wiper system according to Claim 1, **characterized in that** the second mechanism (72) is a gearwheel mechanism (74).

3. Wiper system according to one of the preceding claims, **characterized in that** the bearing spindle (60) has a first gearwheel (62) which is arranged in a rotationally fixed manner and meshes with a second gearwheel (66) which is arranged on a bearing spindle (64) of the control arm (38).

4. Wiper system according to one of the preceding claims, **characterized in that** the gearwheels (62, 64) have different radii (r₁, r₂).

5. Wiper system according to Claim 4, **characterized in that** the radius (r₁) of the first gearwheel (62) is smaller than the radius (r₂) of the second gearwheel (66).

6. Wiper system according to Claim 1, **characterized in that** the second mechanism (72) is a multi-jointed mechanism.

7. Wiper system according to Claim 6, **characterized in that** the second mechanism (72) is a four-bar mechanism (80) acting as a coupling mechanism.

8. Wiper system according to either of Claims 6 and 7, **characterized in that** a first mechanism element (82) is connected in a rotationally fixed manner to the bearing spindle (60), a third mechanism element (90) is connected in a rotationally fixed manner to the bearing spindle (64), and the mechanism elements (92, 90) are connected to each other in an articulated manner via movably mounted mechanism elements (86, 42).

9. Wiper system according to Claim 8, **characterized in that** an effective length of the mechanism element (86) is greater than an effective length of the mechanism element (42).

## Revendications

1. Système d'essuie-glace, notamment pour les vitres de véhicules automobiles, comprenant un bras d'essuie-glace (18) dont une extrémité est montée dans un palier articulé (30) suivant un montage pendulaire et dont l'autre extrémité, libre, porte un balai d'essuie-glace (16) applicable contre la vitre à essuyer, et qui effectue un mouvement de va-et-vient transversalement à son extension longitudinale entre deux positions d'inversion de mouvement, comportant un bras de commande (38) sensiblement parallèle au bras d'essuie-glace (18) et dont une extrémité est montée dans un palier pendulaire et l'autre extrémité est reliée de manière articulée au balai d'essuie-glace (16) de façon que le bras d'essuie-glace (18) et le bras de commande (38) exécutent pratiquement le même mouvement pendulaire en mode d'essuyage,
le palier articulé (30) coopérant avec une première transmission qui guide le bras de commande (38),
la première transmission comportant un axe de palier (60) monté dans l'articulation (22) de la liaison entre le bras d'essuie-glace (18) et le levier oscillant (30), ainsi qu'un autre axe de palier (64) monté dans l'articulation (36) de la liaison entre le bras de commande (38) et la biellette (40), ainsi qu'une seconde transmission (72) coopérant avec la première transmission pour combiner le mouvement pendulaire avec un mouvement de translation du balai d'essuie-glace (16),
**caractérisé en ce que**
les axes de palier (60, 64) sont les axes de la seconde transmission (72).

2. Système d'essuie-glace selon la revendication 1,
**caractérisé en ce que**
la seconde transmission (72) est une transmission à pignon denté (74).

3. Système d'essuie-glace selon l'une des revendications précédentes,
**caractérisé en ce que**
l'axe de palier (60) comporte un premier pignon denté (62) solidaire en rotation, engrenant avec un second pignon d'entraînement (66) installé sur l'axe de palier (64) du bras de commande (38).

4. Système d'essuie-glace selon l'une des revendications précédentes,
**caractérisé en ce que**
les pignons dentés (62, 64) ont de rayons (r₁, r₂) différents.

5. Système d'essuie-glace selon la revendication 4,
**caractérisé en ce que**
le rayons (r₁) du premier pignon denté (62) est inférieur au rayon (r₂) du second pignon denté (66).

6. Système d'essuie-glace selon la revendication 1,
**caractérisé en ce que**
la seconde transmission (72) est une transmission à plusieurs articulations.

7. Système d'essuie-glace selon la revendication 6,
**caractérisé en ce que**
la seconde transmission (72) est une transmission à quadrangle (80) fonctionnant comme mécanisme à bielle.

8. Système d'essuie-glace selon l'une des revendications 6 et 7,
**caractérisé en ce que**
le premier élément de transmission (82) est relié solidairement en rotation à l'axe de palier (60), un troisième élément de transmission (90) est relié solidairement en rotation à l'axe de palier (64), et les éléments de transmission (92, 90) sont reliés de manière articulée par des éléments de transmission (86, 42) montés de manière mobile.

9. Système d'essuie-glace selon la revendication 8,
**caractérisé en ce que**
la longueur active de l'élément de transmission (86) est supérieure à la longueur active de l'élément de transmission (42).
